**Europäisches Patentamt**

**European Patent Office**

**Office européen des brevets**

(19)

(11) Veröffentlichungsnummer: **0 122 953**
A1

# (12) EUROPÄISCHE PATENTANMELDUNG

(21) Anmeldenummer: 83103988.8

(22) Anmeldetag: 23.04.83

(51) Int. Cl.³: **G 01 M 11/00**

(43) Veröffentlichungstag der Anmeldung:
**31.10.84 Patentblatt 84/44**

(84) Benannte Vertragsstaaten:
**AT CH DE LI NL**

(71) Anmelder: **ANT Nachrichtentechnik GmbH**
**Gerberstrasse 33**
**D-7150 Backnang(DE)**

(72) Erfinder: **Schmid, Roland, Dipl.-Phys. Dr. rer. nat.**
**Ulmer Strasse 70**
**D-7430 Metzingen(DE)**

(74) Vertreter: **Schickle, Gerhard, Dipl.-Ing.**
**ANT Nachrichtentechnik GmbH Patent- und**
**Lizenzabteilung Gerberstrasse 33**
**D-7150 Backnang(DE)**

(54) Verfahren zum Ermitteln des Rückstreudiagramms eines Lichtwellenleiters.

(57) Ein Verfahren zum Ermitteln des Rückstreudiagramms eines Lichtwellenleiters besteht darin, daß in den Lichtwellenleiter nacheinander mehrere Lichtimpulse eingespeist werden, das Rückstreusignal eines jeden Lichtimpulses in ein elektrisches Signal umgewandelt und digitalisiert wird und anschließend in mehreren Mittelungsprozessen aus allen Rückstreusignalen ein mittleres Rückstreudiagramm bestimmt wird. Dabei werden zu dem Mittelungsprozeß die allen Längenelementen des Lichtwellenleiters zugeordneten Abtastwerte eines Rückstreusignals zusammen mit allen registrierten Abtastwerten vorheriger Rückstreusignale herangezogen.

EP 0 122 953 A1

./...

- *1* -

ANT Nachrichtentechnik GmbH

Gerberstraße 33

D-7150 Backnang

K1 E7/Th/Mü

BK 82/164

Verfahren zum Ermitteln des Rückstreudiagramms
eines Lichtwellenleiters

Die vorliegende Erfindung befaßt sich mit einem Verfahren
zum Ermitteln des Rückstreudiagramms eines Lichtwellenleiters, wobei in den Lichtwellenleiter in eine Richtung nacheinander mehrere Lichtimpulse eingekoppelt werden, der in
die Gegenrichtung rückgestreute Lichtanteil eines jeden
Lichtimpulses empfangen und in ein elektrisches Signal umgewandelt wird, dieses Rückstreusignal abgetastet und aus den
Abtastwerten der Rückstreusignale aller Lichtimpulse durch
Mittelung das Rückstreudiagramm bestimmt wird.

Die Ursachen der Lichtdämpfung in einem Lichtwellenleiter
können Absorptionsverluste aufgrund von Verunreinigungen,
Streuungen, bedingt durch Geometriestörungen, die größer
als die Lichtwellenlänge sind, und Streuungen in Folge von
Brechungsindexschwankungen sein. Mit dem Rückstreumeßverfahren kann der Verlauf der Dämpfung auf der Lichtwellenleiterstrecke, also das Dämpfungsverhalten jedes Lichtwellenleiterlängenelementes, erfaßt werden. Daher ist es

0122953
BK 82/164

möglich, an Hand eines ermittelten Rückstreudiagramms
Dämpfungserhöhungen und Diskontinuitäten der Lichtwellenleiterstrecke sehr genau zu lokalisieren und zu analysieren.

In der ETZ, Bd. 103 (1982), Heft 4, S. 185-191 ist ein Verfahren zum Ermitteln eines Rückstreudiagramms beschrieben.
Dabei wird in den zu prüfenden Lichtwellenleiter ein Lichtimpuls an einem Ende eingekoppelt und der zeitliche Verlauf
des Lichtanteils erfaßt, der in dem Lichtwellenleiter an den
einzelnen Längenelementen gestreut und wieder an das Ende
zurückgeführt wird. Mit zunehmender Länge des Lichtwellenleiters wird der Signalpegel des Rückstreudiagramms immer
kleiner und wird schließlich durch das Rauschen überdeckt,
was durch Schaltungsteile (Laser, Fotodiode, Verstärker
etc.) der Rückstreumeßvorrichtung hervorgerufen wird. Um
das Signal-Rausch-Verhältnis des Rückstreudiagramms zu verbessern und damit ein zuverlässiges Rückstreuverhalten auch
von langen Lichtwellenleitern (>10 km) bestimmen zu können,
wird ein Mittelungsverfahren angewendet. Das Mittelungsverfahren besteht hier darin, daß nacheinander mehrere Lichtimpulse in den Lichtwellenleiter eingekoppelt werden, der
zeitliche Verlauf des rückgestreuten Lichtanteils jeweils an
einer einem bestimmten Längenelement des Lichtwellenleiters
zugeordneten Stelle abgetastet wird und die Abtastwerte
mehrerer Rückstreusignale gemittelt werden. Nachdem der einem Längenelement zugeordnete mittlere Abtastwert bestimmt
worden ist, wird der gleiche Prozeß mit einem nächsten
Längenelement des Lichtwellenleiters vollzogen und soweit
fortgeführt bis für alle Längenelemente ein mittlerer Abtastwert vorliegt. Aus all diesen mittleren Abtastwerten
wird schließlich das komplette Rückstreudiagramm gebildet.
Bei diesem Verfahren  dauert es relativ lange bis das endgültige Rückstreudiagramm vorliegt.

Der Erfindung liegt daher die Aufgabe zugrunde, ein Verfahren der eingangsgenannten Art anzugeben, das in wesentlich kürzerer Zeit ein Rückstreudiagramm mit großem Signal-Rausch-Verhältnis liefert.

Diese Aufgabe wird erfindungsgemäß dadurch gelöst, daß der gesamte zeitliche Verlauf eines jeden Rückstreusignals abgetastet wird und daß zu jedem Mittelungsprozeß die allen Längenelementen des Lichtwellenleiters zugeordneten Abtastwerte eines Rückstreusignals zusammen mit allen registrierten Abtastwerten vorheriger Rückstreusignale herangezogen werden.

Zweckmäßige Ausführungen der Erfindung gehen aus den Unteransprüchen hervor.

Das erfindungsgemäße Verfahren liefert das mittlere Rückstreudiagramm bei der Erfassung von N Längenelementen in einer um den Faktor 1/N kürzeren Zeit als das bekannte Verfahren bei der gleichen Anzahl von Mittelungen.

Da gemäß der Erfindung pro Lichtimpuls der gesamte zeitliche Verlauf des Rückstreusignals abgetastet und registriert wird, wirken sich Amplitudenänderungen der Lichtimpulse jeweils auf das gesamte Rückstreusignal aus und können so keinen Rauschbeitrag liefern. Daher ist keine sehr aufwendige Ansteuer- und Regelschaltung für den die Lichtimpulse abgebenden Laser erforderlich.

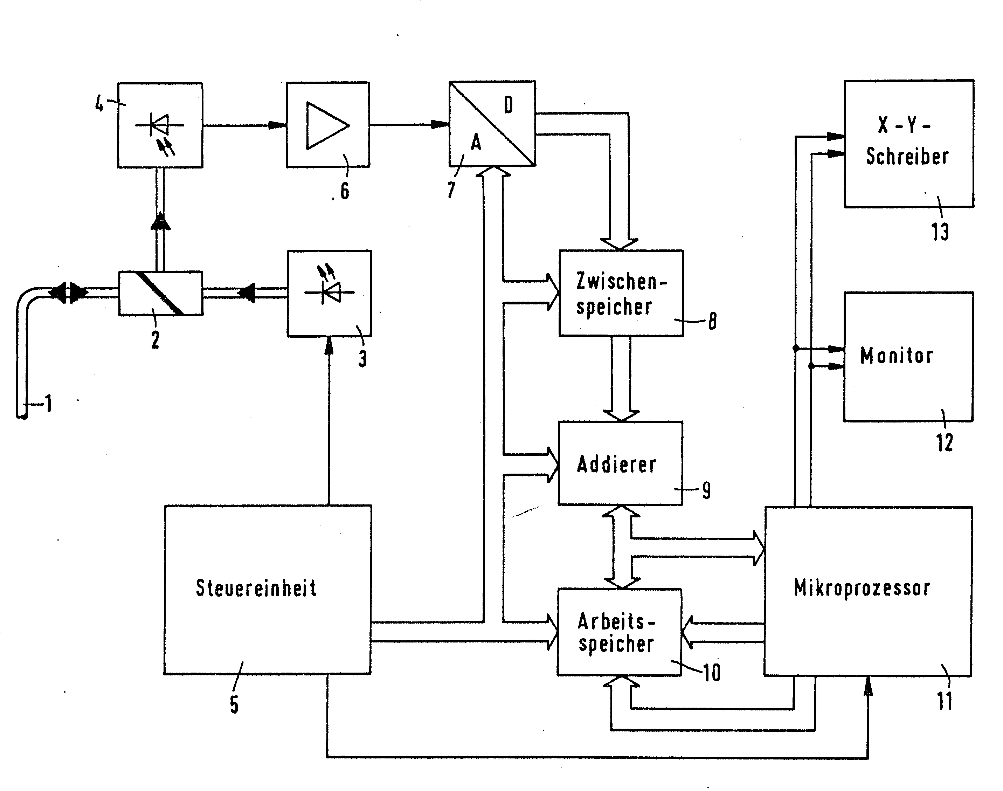

Anhand eines in der Zeichnung dargestellten Ausführungsbeispiels wird nun die Erfindung näher erläutert.

Die Figur zeigt das Blockschaltbild eines Rückstreumeßgerätes, welches das Rückstreudiagramm nach dem erfindungsgemäßen Verfahren ermittelt.

Der zu prüfende Lichtwellenleiter 1 ist an einem Tor eines Strahlteilers 2, wie er z. B. aus der europäischen Patentanmeldung Nr. 38 563 bekannt ist, angeschlossen. An ein zweites Tor des Strahlteilers ist ein Laser 3 und an ein drittes Tor eine Fotodiode 4 angekoppelt. Eine Steuereinheit 5 regt den Laser 3 an, so daß dieser einen Lichtimpuls abgibt, der über den Strahlteiler 2 in den Lichtwellenleiter 1 eingespeist wird. Der in dem Lichtwellenleiter
rückgestreute Anteil des Lichtimpulses gelangt an den Anfang des Lichtwellenleiters zurück und wird durch den Strahlteiler zur Fotodiode 4 geleitet. Am Ausgang der Fotodiode
steht dann ein dem optischen Rückstreusignal proportionales
elektrisches Signal an. Dieses analoge elektrische Rückstreusignal durchläuft anschließend einen Vorverstärker 6 und wird
darauf in einem Analog-Digitalumsetzer 7 in äquidistanten
Zeitintervallen abgetastet und jeder Abtastwert digitalisiert.
Die Abtastwerte des zeitlichen Verlaufs des Rückstreusignals
geben das Rückstreuverhalten der einzelne Längenelemente des
Lichtwellenleiters wieder, wobei die Größe der Längenelemente
von den Abständen der Abtastzeitpunkte abhängt.

Alle Abtastwerte, also die Meßdaten über das Rückstreuverhalten des gesamten Lichtwellenleiters, werden nun in einen
Zwischenspeicher 8 eingelesen. Ein Addierer 9 addiert dann
den Inhalt des Zwischenspeichers 8 zu den in einem Arbeitsspeicher 10 vorhandenen Daten. Im Arbeitsspeicher sind aber
zum Zeitpunkt des ersten vom Laser 3 abgegebenen Lichtimpulses noch keine Daten vorhanden. Schließlich wird das Ergebnis der Addition in den Arbeitsspeicher 10 eingeschrieben.
Es liegen jetzt die Abtastwerte des ersten Rückstreusignals
im Arbeitsspeicher vor. Anschließend gibt der Laser einen
zweiten Lichtimpuls auf den Lichtwellenleiter und es wiederholt sich der eben geschilderte Vorgang. Die Abtastwerte des
zweiten Rückstreusignals werden wiederum digitalisiert,
zwischengepeichert, die zwischengespeicherten Abtastwerte zu
den vorher im Arbeitsspeicher abgelegten Abtastwerten gleichgewichtet addiert und das Ergebnis der Summation neu in den
Arbeitsspeicher eingelesen.

Dieser Mittelungsprozeß läßt sich beliebig oft wiederholen.
Es sollten soviele Mittelungen vorgenommen werden, daß letztendlich das im Arbeitspeicher vorliegende Rückstreudiagramm
ein ausreichend gutes Signal-Rausch-Verhältnis aufweist, um das Dämpfungsverhalten des Lichtwellenleiters mit großer Genauigkeit am Rückstreudiagramm ablesen zu können. Mit der Anzahl der Mittelungen steigt auch der Dynamikbereich des Rückstreudiagramms.

Der oben aufgeführte Zwischenspeicher ist nicht unbedingt erforderlich und zwar dann, wenn ein sehr schneller Addierer zur Verfügung steht, der die Ausgangsdaten des Analog-Digital-Umsetzers direkt (on-line) verarbeiten kann.

Nachdem alle Mittelungsprozesse abgeschlossen sind, werden die Daten des Rückstreudiagramms aus dem Arbeitsspeicher ausgelesen. Für eine übersichtliche Darstellung auf einem Monitor 12 und/oder einem X-Y-Schreiber 13 werden diese Daten mit einem Mikroprozessor 11 weiterverarbeitet, welcher insbesondere eine Logarithmierung der Rückstreukurve durchführt. Diese Logarithmierung mit Hilfe des Mikroprozessors kann entfallen, wenn das analoge, elektrische Signal mittels eines diskret aufgebauten Logarithmierers zwischen Vorverstärker 6 und Analog-Digitalumsetzer 7 logarithmiert wird.

Die zu Anfang der Beschreibung erwähnte Steuereinheit 5 ist zuständig für die Steuerung der einzelnen Schaltungselemente, wie Laser, Analog-Digitalumsetzer, Zwischenspeicher, Addierer, Arbeitsspeicher und Mikroprozessor, so daß die einzelnen Verfahrensschritte zum richtigen Zeitpunkt und in der richtigen Reihenfolge ablaufen.

Anschließend sollen noch einige konkrete Spezifikationen der in der Figur dargestellten Schaltung angegeben werden.

Der Laser gibt seine Lichtimpulse mit einer Folgefrequenz von 2 bis 4 kHz ab.

Der Analog-Digitalumsetzer digitalisiert das analoge Signal mit 9 Bit und besitzt eine Umsetzrate von maximal 20 MHz ($\hat{=}$ 50 ns). Ist eine bessere Ortsauflösung (d. h. geringerer Abstand der Abtastzeitpunkte) erwünscht, so wird ein Analog-
Digitalumsetzer mit 8 Bit und einer Umsetzrate von 50 MHz
( $\hat{=}$ 20 ns) verwendet.

Der Zwischenspeicher ist ein N-MOS oder C-Mos Speicher mit
Speicherzeiten bis 35 ns oder ein ECL (Emitter - gekoppelte
Logik) Speicher mit Speicherzeiten bis 20 ns.

Der Addierer arbeitet mit 28 Bit mit Additionszeiten für
einen Abtastwert mit 100 ns. Ein ECL-Addierer wäre mit einer
Additionszeit von 25 ns für einen Abtastwert so schnell, daß
man ohne Zwischenspeicher auskäme.

Der Arbeitsspeicher ist so gewählt, daß seine Speicherzeiten
an die Additionszeiten des Addierers angepaßt sind.

Unter den genannten Voraussetzungen beträgt die Additionszeit
für 1000 Abtastwerte (bei einer Länge des Lichtwellenleiters
von 20 km) 400 µs; d. h. es werden 2500 Additionen bzw. Mittelungen pro Sekunde durchgeführt. Insgesamt laufen mehr als
$10^3$ Mittelungsprozesse ab.

- 1 -

ANT Nachrichtentechnik GmbH

Gerberstraße 33

D-7150 Backnang

K 1 E7/Th/Mü
BK 82/164

Patentansprüche

1. Verfahren zum Ermitteln des Rückstreudiagramms eines Lichtwellenleiters, wobei in den Lichtwellenleiter in eine Richtung nacheinander mehrere Lichtimpulse eingekoppelt werden, der in die Gegenrichtung rückgestreute Lichtanteil eines jeden Lichtimpulses empfangen und in ein elektrisches Signal umgewandelt wird, dieses Rückstreusignal abgetastet und aus den Abtastwerten der Rückstreusignale aller Lichtimpulse durch Mittelung das Rückstreudiagramm bestimmt wird, dadurch gekennzeichnet, daß der gesamte zeitliche Verlauf eines jeden Rückstreusignals abgetastet wird und daß zu jedem Mittelungsprozeß die allen Längenelementen des Lichtwellenleiters zugeordneten Abtastwerte eines Rückstreusignals zusammen mit allen registrierten Abtastwerten vorheriger Rückstreusignale herangezogen werden.

2. Verfahren nach Anspruch 1, dadurch gekennzeichnet, daß die Abtastwerte jedes Rückstreusignals digitalisiert werden, dann die digitalisierten Abtastwerte zu den in einem Arbeitsspeicher (10) abgelegten digitalisierten Abtastwerten vorheriger Rückstreusignale gleichgewichtet
addiert werden, darauf das Ergebnis dieser Addition in
den Arbeitsspeicher (10) eingeschrieben wird und nach
mehreren solchen Mittelungsprozessen die im Arbeitsspeicher vorhandenen Daten des mittleren Rückstreudiagramms ausgelesen und auf einem Monitor (12) oder X-Y-
Schreiber (13) dargestellt werden.

3. Verfahren nach Anspruch 2, dadurch gekennzeichnet, daß die
digitalisierten Abtastwerte jedes Rückstreusignals vor der
Addition zwischengespeichert werden.

**Europäisches Patentamt**

**EUROPÄISCHER RECHERCHENBERICHT**

**0122953**

Nummer der Anmeldung

EP 83 10 3988

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | NTZ, Band 35, Nr. 5, 1982 M. SCHULZE "Rückstreumessverfahren zur Beurteilung von Lichtwellenleitern", Seiten 292-297 <br> * Seite 295, Spalte 3, "Auswertung mit Digitalisierung" bis Seite 296 * | 1,2 | G 01 M 11/00 |
| | --- | | |
| X | EP-A-0 068 078 (PHILIPS KOMMUNIKATIONS INDUSTRIE AG) <br> * Ansprüche 1-7 * | 1 | |
| | --- | | |
| A | SIEMENS FORSCHUNGS- UND ENTWICKLUNGSBERICHTE, Band 10, Nr. 1, 1981 D. SCHICKETANZ "Anwendung des Rückstreumessplatzes in der Lichtwellenleitertechnik", Seiten 53-59 <br> * Seite 58 Anhang * | | RECHERCHIERTE SACHGEBIETE (Int. Cl. ³) <br><br> G 01 M 11/00 |
| | --- | | |
| D,A | ETZ, Band 103, Nr. 4, 1982 E. MEIER-ENGELEN "Fehlerortung an Lichtwellenleitern", Seiten 185-191 | | |
| | --- | | |
| D,A | EP-A-0 038 563 (CSELT) | | |
| | ----- | | |

Der vorliegende Recherchenbericht wurde für alle Patentansprüche erstellt.

| Recherchenort <br> BERLIN | Abschlußdatum der Recherche <br> 09-12-1983 | Prüfer <br> KOEHN G |
|---|---|---|